## Europäisches Patentamt
## European Patent Office
## Office européen des brevets

(19)

(11) Numéro de publication: **0 188 959**
**B1**

(12) **FASCICULE DE BREVET EUROPÉEN**

(45) Date de publication du fascicule du brevet: 02.08.89

(51) Int. Cl.⁴: **H 01 B 7/28**

(21) Numéro de dépôt: **85402590.5**

(22) Date de dépôt: **20.12.85**

(54) **Matériau composite hydroexpansible, sa préparation et composition pour la mise en oeuvre de celle-ci, ainsi que ses utilisations.**

(30) Priorité: **21.12.84 FR 8419710**

(43) Date de publication de la demande: **30.07.86 Bulletin 86/31**

(45) Mention de la délivrance du brevet: **02.08.89 Bulletin 89/31**

(84) Etats contractants désignés: **BE DE GB IT NL**

(56) Documents cité: **FR-A-2 311 392** **GB-A-1 389 961** **GB-A-2 060 998**

(73) Titulaire: **INTISSEL, B.P. 107 - Z.I. de la Martinoire Rue Jacquard, F-59393 Wattrelos (FR)** Titulaire: **NOVACEL, 27, rue du Docteur E. Bataille, F-76250 Deville- les- Rouen (FR)**

(72) Inventeur: **Anton, Patrice, 139, rue de l'Eglise, Villers- Escalles F-76300 Barentin (FR)** Inventeur: **Bergaentzle, Denis, 59 Chemin du colbras, F-59250 Halluin (FR)**

(74) Mandataire: **Ayache, Monique, CABINET PLASSERAUD 84, rue d'Amsterdam, F-75009 Paris (FR)**

EP 0 188 959 B1

LIBER, STOCKHOLM 1989

## Description

L'invention concerne un matériau composite apte à gonfler, sans se dissoudre de façon importante, en présence d'eau ou de solutions aqueuses.

Plus précisément, l'invention a pour objet un matériau composite constitué essentiellement d'un support solide plat muni, sur au moins une de ses faces, d'un revêtement comprenant une forte proportion d'une poudre de polymère apte à gonfler en présence d'eau ou de solutions aqueuses, un procédé pour la fabrication de ce matériau composite, une composition pour la mise en oeuvre de ce procédé et les utilisations de ce matériau composite.

On connaît déjà des matériaux composites aptes à gonfler, sans se dissoudre de façon importante, en présence d'eau. De tels matériaux sont en général utilisés dans l'industrie des câbles électriques. Ils sont alors introduits, sous forme de ruban, dans l'enveloppe du câble pour assurer son étanchéité longitudinale, en formant, par gonflement, un bouchon lors de l'entrée accidentelle d'eau dans le câble tant par ses extrêmités qu'au niveau d'un percement de l'enveloppe, empêchant ainsi la propagation de l'eau à l'intérieur du câble.

Parmi les rubans de ce type, on peut citer celui qui est commercialisé par la Société Freundenberg, Weinheim, R.F.A. sous la dénomination VILEDON-FIBREX et les références connues à ce jour K3310, K3312, K3313 et 3303C, et celui qui est commercialisé par la Société Firet, Veenendaal, Pays-Bas sous les références connues à ce jour: 3C 115, 3C 116, 3E 113, 3E 114, 3E 115 et 3E 116, auquel il est fait référence dans le brevet FR 8 102 863.

Ces rubans sont essentiellement constitués d'une poudre de polymère hydroexpansible prise "en sandwich" entre deux couches de non-tissé.

La cohésion du composite est obtenue par incorporation à la poudre de polymère hydroexpansible, d'une substance (poudre, fibre ou autre) thermoplastique. Sous l'action conjuguée de la pression et de la chaleur, la substance thermoplastique se ramollit, devient collante, et assure ainsi la cohésion du composite. Lors de cette action de collage, la substance thermoplastique provoque un effet défavorable: le blocage d'une partie de la poudre de polymère hydroexpansible, limitant ainsi sa capacité de gonflement en présence d'eau.

Selon l'invention, on a maintenant trouvé que l'on pouvait améliorer considérablement les propriétés d'un tel matériau composite tout en simplifiant sa structure, en emplaçan la substance thermoplastique des composites de l'art antérieur par un liant hydrosoluble. L'invention a entre autres pour objet le matériau composite ainsi obtenu.

L'invention a plus particulièrement pour objet un matériau composite comprenant essentiellement un support solide plat muni, sur au moins une de ses faces, d'un revêtement comprenant une forte proportion d'une poudre de polymère hydroexpansible, caractérisé en ce que la poudre de polymère hydroexpansible est fixée sur le support au moyen d'un liant hydrosoluble, de préférence en présence d'un agent tensio-actif, et en ce que le revêtement est essentiellement constitué de:
- 95 à 55 % en poids de poudre de polymère hydroexpansible;
- 5 à 23 % en poids de liant hydrosoluble; et
- 0 à 22 % en poids d'agent tensio-actif.

Un tel matériau permet de maintenir l'eau à l'endroit où elle est introduite et présente donc de nombreuses applications.

Ainsi, il peut être utilisé comme ruban d'étanchéité dans des câbles, notamment électriques mais également en agriculture comme activateur de germination ou pour la transplantation des jeunes pousses ou en médecine ou chirurgie comme "éponge".

Le support de ce matériau est choisi essentiellement en fonction de l'application envisagée.

Il peut être constitué notamment d'un non-tissé, d'un textile, de papier ou de matière plastique. Pour la plupart des applications, notamment dans l'industrie des câbles de transport d'énergie, de télécommunications ou de fibres optiques, il est de préférence souple.

Le revêtement peut être, si on le désire, recouvert d'une pellicule de matériau se laissant traverser par l'eau, notamment un voile de non-tissé. Toutefois, au moins dans la plupart des applications, la présence d'une telle pellicule n'est pas nécessaire et complique la fabrication et le coût du matériau composite sans lui apporter d'avantage.

Le polymère hydroexpansible peut être constitué de tout polymère ou mélange de polymères compatible avec le support et l'application envisagés et capable de gonfler de façon importante en présence d'eau ou de solutions aqueuses par "emmagasinage" de celles-ci, tout en y étant insoluble, c'est-à-dire en présentant une solubilité dans ces liquides inférieure à 5 %.

Avantageusement, le polymère hydroexpansible est choisi de telle sorte qu'il soit capable d'absorber au moins 15 fois son propre poids d'eau.

Le polymère hydroexansible peut être choisi notamment parmi les polymères acryliques modifiés, les amidons greffés, les polyacrylamides, la carboxyméthylcellulose et ses dérivés et avantageusement de façon générale parmi les polymères répondant à la définition des "superabsorbants", c'est-à-dire les polymères "insolubles" (au sens indiqué plus haut) dans les fluides qu'ils absorbent et absorbant au moins 15 fois leur propre poids d'eau ou de solution aqueuse.

En tant que polymères superabsorbants, on peut citer à titre indicatif mais en aucune façon limitatif:

- le polymère acrylique commercialisé par la société JAPAN CATALYTIC CHEMICAL sous la dénomination AQUALIC;
- le polymère d'acrylamide commercialisé par la société CYANAMID sous la dénomination HYDROBLOCK;
- le polymère de carboxyméthylcellulose commercialisé par la société HERCULES sous la dénomination AQUASORB;
- le polymère amidon/acide polyacrylique obtenu par greffage et commercialisé par la société LION sous la dénomination LION-POLYMER; et
- le polymère polyacrylate de sodium commercialisé par la société GRAIN PROCESSING sous la dénomination WATER-LOCK J.

Le liant hydrosoluble est choisi parmi les liants hydrosolubles capables de fixer la poudre de polymère choisie, sur le support choisi, sans modifier sensiblement leurs propriétés physico-chimiques.
Parmi les liants que l'on peut avantageusement utiliser dans le cadre de l'invention on peut citer, à titre d'exemples non limitatifs:

- les polyvinylpyrrolidones commercialisées par la société GAF, sous les dénominations commerciales PVP K 30 et PVP K 90;
- les polyvinylpyrrolidones et copolymères de vinylpyrrolidone-acétate de vinyle commercialisés par la société BASF (RFA) sous les dénominations commerciales de Luviskol K30-K90; et
- les hydroxypropylcelluloses commercialisées par la société HERCULES (USA) sous les dénominations commerciales Klucel H, M, G, J, L et E.

Bien que la présence d'un agent tensio-actif ne soit pas indispensable, il a été établi qu'elle joue un rôle favorable, notamment pour assurer une bonne conservation de la pâte d'enduction et faciliter l'opération d'enduction au moment de la fabrication du matériau composite.
On utilise de préférence, en tant qu'agent tensio-actif, un agent tension tensio-actif anionique ou non ionique.
Parmi les agents tensio-actifs qui peuvent être utilisés dans le cadre de l'invention, on peut citer, à titre d'exemples non limitatifs:

- le produit commercialisé par la société Ronm and Haas (USA) sous les dénominations commerciales de Triton X 100 et Triton GR 5 M;
- le produit commercialisé par la société BYK-MALLINCKRODT sous la dénomination ANTI-TERRA-U;
- le produit commercialisé par la société PETROCHEMICALS CO., INC. sous la dénomination de MORWET EFN;
- les produits commercialisés par la société AIR PRODUCTS sous la dénomination de SURFYNOL; et
- le produit commercialisé par la société BASF (RFA) sous la dénomination de Leophen RA.

Le revêtement a une épaisseur comprise de préférence entre 10 et 1000 $\mu$m.
Pour l'utilisation en tant qu'agent d'étanchéité dans l'industrie des câbles électriques pour le transport de l'énergie moyenne et haute tension, il est avantageux de rendre le matériau composite conducteur, ceci afin d'obtenir une conductibilité acceptable dans son épaisseur et à sa surface.
Habituellement, pour ce faire, le support solide et plat est chargé au préalable d'un matériau permettant d'obtenir une résistance surfacique et transversale adaptée au type de câble (en général entre 8 et 20 g/m$^2$ de noir de carbone conducteur suffisent; ils sont introduits dans le support lors de la fabrications de celui-ci).
Le matériau composite selon l'invention peut, comme il sera vu plus loin, être fabriqué par enduction du support avec une pâte. Cette pâte, et c'est là un des avantages de ce procédé, peut contenir du noir de carbone conducteur, en une quantité telle que le revêtement hydroexpansible obtenu contienne de préférence entre 2 et 8 g/m$^2$ de noir de carbone. Cette facilité permet d'éviter l'effet appelé "biface" et donc d'obtenir des conductibilités homogènes sur chacune des faces et dans l'épaisseur.
L'invention a donc en outre pour objet un matériau composite selon l'invention tel que défini plus haut, pour l'utilisation en tant qu'agent d'étanchéité dans des câbles électriques pour le transport de l'énergie moyenne et haute tension, caractérisé en ce que son revêtement comporte en outre de 2 à 8 g/m$^2$ de noir de carbone conducteur.
Le matériau composite selon l'invention peut être fabriqué par enduction du support sur au moins une de ses faces avec une pâte comprenant la poudre de polymère hydroexpansible, le liant hydrosoluble et l'agent tensioactif choisis, dans les proportions prévues pour le revêtement, ainsi qu'éventuellement d'autres adjuvants et/ou du noir de carbone, homogénéisée au moyen d'un liquide autre que l'eau et évaporation subséquente du liquide.
L'enduction peut être réalisée au moyen d'un dispositif d'enduction classique comprenant notamment un réservoir pour la pâte et des rouleaux d'entraînement et de raclage du support, tel que celui connu sous le nom de rouleau-râcle.
L'évaporation du liquide peut être effectuée dans un séchoir, par exemple du type à air chaud pulsé. Le liquide utilisé a pour but la mise en dispersion du polymère hydroexpansible et des différents adjuvants nécessaires de façon à obtenir une pâte dont la consistance (viscosité) et l'homogénéité rendent possible l'opération d'enduction, sans provoquer à ce stade l'expansion du polymère hydroexpansible. Il peut avantageusement être choisi parmi les alcools légers du type méthanol ou éthanol.

L'invention vise en outre une pâte d'enduction pour la fabrication du matériau composite selon l'invention, caractérisée en ce qu'elle comprend essentiellement, en poids:

- 57 à 16,5 % de poudre de polymère hydroexpansible;
- 1,5 à 13,8 % de liant hydrosoluble;
- 0 à 13,2 % d'agent tensio-actif;
- 0 à 14,4 % de noir de carbone conducteur; et
- 40 à 70 % de liquide d'homogénéisation.

Cette pâte est préparée en dissolvant au préalable le liant hydrosoluble dans le liquide d'homogénéisation; puis, on ajoute dans cet ordre l'agent tensio-actif, le polymère hydroexpansible, les autres charges éventuelles telles que noir de carbone conducteur. En tout état de cause, la viscosité de la pâte d'enduction selon l'invention est ajustée en fonction de la nature du liant utilisé de telle sorte que l'enduction soit aisée à réaliser et que la couche de revêtement obtenue soit régulière et bien adhérente au support.

Comme il a déjà été indiqué plus haut, le matériau composite selon l'invention peut avoir des applications variées.

Ainsi, il peut être utilisé en tant qu'absorbant de l'eau ou des liquides physiologiques, notamment en médecine et en chirurgie ou dans le domaine des produits sanitaires tels que couches à jeter etc...

Il peut également être utilisé en agriculture comme activateur de germination pour maintenir l'eau à l'endroit où la graine est déposée; cette localisation précise est particulièrement intéressante lorsque l'eau est enrichie en substances favorisant la croissance telle que substances nutritives. De plus, des substances telles que composés anticryptogamiques, fongicides, engrais peuvent facilement être incorporés dans le matériau composite au moment de l'enduction.

Le matériau composite selon l'invention peut également être utilisé pour la transplantation des jeunes pousses. Celles-ci sont emballées avec leur motte dans le matériau composite et peuvent subir, après trempage dans de l'eau, une transplantation sans risque.

Comme indiqué plus haut, une autre application importante du matériau composite selon l'invention est son utilisation dans les câbles pour assurer leur étanchéité longitudinale.

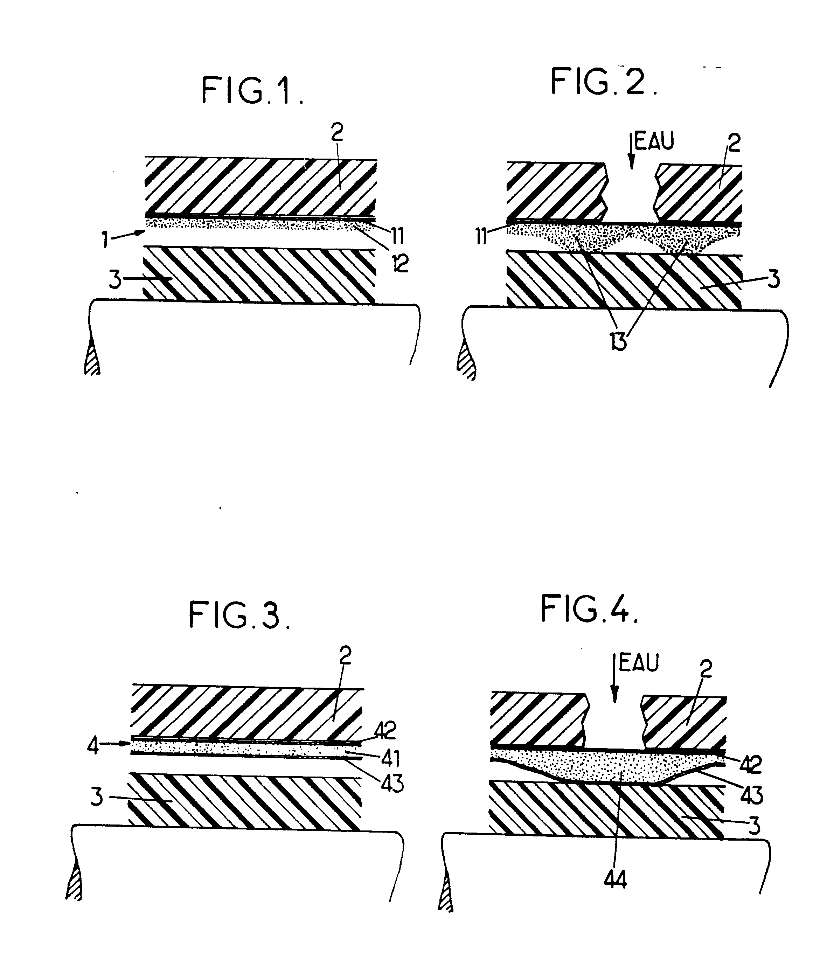

En se reportant aux figures 1 et 2 de la planche de dessins annexée, il est montré ci-après comment se comporte le matériau composite selon l'invention lorsqu'il est incorporé dans la gaine d'un câble, en présence d'eau traversant accidentellement l'enveloppe externe du câble.

Le matériau composite selon l'invention 1 constitué d'un support perméable à l'eau 11 et d'un revêtement essentiellement constitué d'un polymère hydroexpansible et d'un liant hydrosoluble 12 est placé entre l'enveloppe externe 2 et l'âme, ou plus généralement l'enveloppe interne 3, câble. Les parties 2 et 3 du câble s'écartent l'une de l'autre de façon plus ou moins importante au cours de l'utilisation du câble (figure 1).

Si de l'eau pénètre accidentellement dans le câble (figure 2), à travers l'enveloppe 2 et traverse le support 11 du matériau composite, elle dissout le liant hydrosoluble au voisinage de l'endroit de sa pénétration dans le câble. Le polymère hydroexpansible qui était fixé au support par le liant dissous se détache du support et a tendance à se déplacer tout en gélifiant pour former, autour de la zone de pénétration de l'eau, un bourrelet 13 qui empêche la propagation de l'eau.

Le polymère hydroexpansible qui n'est plus entrobé par le liant peut développer toute sa capacité de gonflement et sa quantité peut être diminuée par rapport à l'art antérieur car il est totalement efficace et en suraccumulation à proximité de la zone d'infiltration accidentelle.

Il va de soi que cette description n'est donnée qu'à titre purement illustratif et qu'en particulier on pourrait prévoir d'autres dispositions à l'intérieur du câble sans sortir du cadre de l'invention.

Les figures 3 et 4 montrent ce qui se passe dans le cas de l'utilisation des composites de l'art antérieur tel que défini plus haut.

Le matériau composite 4 est constitué d'une couche 41 de polymère hydroexpansible erobé de substance thermoplastique, non soluble dans l'eau et prise en "sandwich" entre deux couches de non-tissé 42 et 43. Lorsque de l'eau pénètre accidentellement dans le câble, le polymère hydroexpansible gonfle au niveau de la pénétration de l'eau, sans se détacher des supports; il donne une "boursouflure" 44 juste à ce niveau, mais ne peut former un bourrelet autour de cette zone.

La protection conférée est donc moins efficace que selon l'invention et surtout comme ce polymère ne peut développer toute sa capacité de gonflement notamment en raison de la présence maintenue du liant thermoplastique, il est nécessaire d'en utiliser une plus grande quantité.

Les exemples suivants de formulation de composition d'enduction et de fabrication du composite selon l'invention sont donnés à titre illustratif et aucunement limitatif.

**Exemple 1: pâte d'enduction:**

| Composants: | Parties en poids |
|---|---|
| - Polymère hydroexpansible AQUALIC CA de JAP.CAT.CHEMICAL... | 100 |
| - Liants hydrosolubles | |
| . Polivinylpyrrolidone K 30 de GAF | 12 |
| . Hydroxypropylcellulose KLUCEL M de HERCULES | 3 |

| | |
|---|---|
| - Agent tensio-actif LEOPHEN RA de BASF | 10 |
| - Noir de carbone conducteur VULCAN PF de CABOT | 5 |
| - Liquide d'homogénéisation METHANOL | 150 |

Cette pâte est préparée par mélange des composants dans l'ordre indiqué plus haut.

**Exemple 2: pâte d'enduction:**

| Composants: | Parties en poids |
|---|---|
| - Polymère hydroexpansible WATERLOCK J550 de GRAIN PROCESSING | 100 |
| - Liant hydrosoluble: | |
|    Polymère hydroxypropylcellulose KLUCEL de HERCULES | 20 |
| - Agent tensio-actif ANTI TERRA U de BYK MALLINCKRODT | 10 |
| - Méthanol | 100 |

**Exemple 3: fabrication d'un matériau composite selon l'invention**

Le support utilisé est un non-tissé fabriqué à partir de fibres de polyester et d'un liant SBR. Les fibres sont orientées de préférence parallèlement.

La pâte est réalisée suivant l'exemple 1 soit dans un broyeur adapté, soit dans un malaxeur, suivant la granulométrie de la poudre choisie, de façon à obtenir un mélange stable. Si nécessaire on enrichit le liant à l'aide de noir de carbone conducteur, de sorte que l'on obtienne des résistances surfaciques de l'ordre de 1500 à 3000 Ohms/cm$^2$.

Ce mélange est enduit à l'aide d'un système rouleau-râcle. Le dépôt est réglé à 78 g/m$^2$, de façon à obtenir, après séchage dans le four, 60 g/m$^2$ de polymère hydroexpansible.

On obtient ainsi un matériau composite comportant une fine couche d'un polymère synthétique fonctionnel, réticulé et hydrophile déposée sur un support non tissé. Ce dépôt se caractérise par une encapsulation du polymère hydrophile.

En cas de contact avec de l'eau, l'encapsulation disparaît et découvre les sites hydrophiles du polymère. Il en résulte un gonflement compact et rapide. Dans le même temps, le polymère superabsorbant se désolidarise du support non tissé. Ce déplacement du gel s'oriente vers les zones de passage préférentiel de l'eau, assurant une excellente efficacité in situ.

Un autre intérêt de l'encapsulation réside dans le fait que le ruban résiste mieux aux ambiances de stockage à forte humidité relative.

**Essais réalisés in situ**

**Exemple 4: câble haute tension comportant le matériau composite fabriqué selon l'exemple 3**

Il s'agit d'un câble de 36 KV. L'essai est réalisé sur 3 m de câble avec saignée périphérique au milieu, mettant à nu le ruban qui est posé longitudinalement entre le plomb et le semi-conducteur extrudé, avec l'enduction vers l'extérieur.

On soumet ce câble à différents cycles correspondant chacun à une mise sous tension pendant 6 h à la température de 90° C puis, avec refroidissement, à la température ambiante pendant 6 h, soit au total de 12 h.

Essai réalisé

- 6 cycles (72 h) sans eau
- 28 cycles (336 h) avec eau courante sous une pression de 8.10$^3$ Pa environ (800 mm d'eau)

Résultat

Pénétration d'eau de part et d'autre de la saignée: 14 à 22 cm.

**Exemple 5: câble pour la téléphonie comportant le matériau composite selon l'exemple 3**

Il s'agit d'un câble "20 paires 6/10". L'essai est réalisé sur 1 m de câble. Le ruban est posé longitudinalement après dépôt de gelée de pétrole et pose d'un film de polyester, avec l'enduction vers l'extérieur.

Essai réalisé

On fait arriver de l'eau courante par une extrémité pendant 2 mois.

Résultat

La propagation de l'eau est en moyenne de 10 cm (15 cm au maximum).

En résumé, l'invention permet notamment d'obtenir:

- une efficacité poussée in situ,
- une épaisseur régulière et faible,
- une découpe en bandelettes jusqu' à 5 mm environ,
- l'obtention, sous eau, d'un gel compact,
- l'accumulation de gel aux endroits des passages préférentiels d'eau,
- l'apparition d'un gel hydrobloquant, non freinée par une élévation ou une baisse de température,
- la protection de la substance hydrophile par encapsulation, pendant le stockage.


**Revendications**

1. Matériau composite comprenant essentiellement un support solide plat muni, sur au moins une de ses faces, d'un revêtement comprenant une forte proportion d'une poudre de polymère hydroexpansible, caractérisé en ce que la poudre de polymère hydroexpansible est fixée sur le support au moyen d'un liant hydrosoluble, de préférence en présence d'un agent tensio-actif, et en ce que le revêtement est essentiellement constitué de:

- 95 à 55 % en poids de poudre de polymère hydroexpansible;
- 5 à 23 % en poids de liant hydrosoluble; et
- 0 à 22 % en poids d'agent tensio-actif.

2. Matériau composite selon la revendication 1, caractérisé ence que le support est souple.
3. Matériau composite selon la revendication 2, caractérisé en ce que le support est en non-tissé.
4. Matériau composite selon l'une des revendications 1 à 3, caractérisé en ce que le polymère hydroexpansible est choisi parmi les polymères acryliques modifiés, les amidons greffés, les polyacrylamides, la carboxyméthylcellulose et ses dérivés.
5. Matériau composite selon l'une des revendications 1 à 4, caractérisé en ce que le matériau hydroexpansible est un superabsorbant.
6. Matériau composite selon l'une des revendications 1 à 5, caractérisé en ce que le liant hydrosoluble est choisi parmi les polyvinylpyrrolidones, et leurs copolymères et les hydroxypropylcelluloses.
7. Matériau composite selon l'une des revendications 1 à 6, caractérisé en ce que l'agent tensio-actif est un agent tensio-actif anionique ou non ionique.
8. Matériau composite selon l'une des revendications 1 à 7, pour l'utilisation en tant qu'agent d'étanchéité dans des câbles électriques pour le transport de l'énergie moyenne et haute tension, caractérisé en ce que son revêtement comporte en outre de 2 à 8 g/m$^2$ de noir de carbone conducteur.
9. Procédé pour la fabrication du matériau composite selon l'une des revendications 1 à 8, caractérisé en ce qu'il consiste à enduire le support sur au moins un de ses faces avec une pâte comprenant la poudre de polymère hydroexpansible, le liant hydrosoluble et l'agent tensio-actif choisis, dans les proportions prévues pour le revêtement, ainsi qu'éventuellement d'autres adjuvants et/ou du noir de carbone, homogénéisée au moyen d'un liquide autre que l'eau et à évaporer ensuite le liquide.
10. Procédé selon la revendication 9, caractérisé en ce que le liquide d'homogénéisation est choisi parmi les alcools légers, de préférence le méthanol ou l'éthanol.
11. Pâte d'enduction pour la mise en oeuvre du procédé selon la revendication 9 ou 10, caractérisée en ce qu'elle comprend essentiellement, en poids:

- 57 à 16,5 % de poudre de polymère hydroexpansible;
- 1,5 à 13,8 % de liant hydrosoluble;
- 0 à 13,2 % d'agent tensio-actif;
- 0 à 14,4 % de noir de carbone conducteur; et
- 40 à 70 % de liquide d'homogénéisation.

12. Utilisation du matériau composite selon l'une des revendications 1 à 8 comme agent d'étanchéité dans des câbles.
13. Utilisation du matériau composite selon l'une des revendications 1 à 7 en agriculture.
14. Utilisation du matériau composite selon l'une des revendications 1 à 7 en médecine et en chirurgie.

EP 0 188 959 B1

**Patentansprüche**

1. Verbundmaterial, umfassend im wesentlichen eine feste Trägerplatte, die auf mindestens einer ihrer Oberflächen mit einer Schicht ausgerüstet ist, die einen bedeutenden Anteil eines hydroexpansionsfähigen Polymerpulvers umfaßt, dadurch gekennzeichnet, daß das hydroexpansionsfähige Polymerpulver auf dem Träger befestigt ist mit Hilfe eines wasserlöslichen Bindemittels bzw. Haftmittels, vorzugsweise in Gegenwart eines oberflächenaktiven Mittels, und daß die Schicht im wesentlichen besteht aus:

- 95 bis 55 Gew.-% hydroexpansionsfähigem Polymerpulver;
- 5 bis 23 Gew.-% wasserlöslichem Bindemittel und
- 0 bis 22 Gew.-% oberflächenaktivem Mittel.

2. Verbundmaterial nach Anspruch 1,
dadurch gekennzeichnet,
daß der Träger biegsam ist.
3. Verbundmaterial nach Anspruch 2,
dadurch gekennzeichnet,
daß der Träger aus einem nicht gewebten Material gemacht ist.
4. Verbundmaterial nach einem der Ansprüche 1 bis 3,
dadurch gekennzeichnet,
daß das hydroexpansionsfähige Polymer ausgewählt ist aus modifizierten Acrylpolymeren, gepfropften Stärken, Polyacrylamiden, Carboxymethylcellulose und ihren Derivaten.
5. Verbundmaterial nach einem der Ansprüche 1 bis 4,
dadurch gekennzeichnet,
daß das hydroexpansionsfähige Material ein superabsorbierendes Mittel ist.
6. Verbundmaterial nach einem der Ansprüche 1 bis 5,
dadurch gekennzeichnet,
daß das wasserlösliche Bindemittel ausgewählt ist aus den Polyvinylpyrrolidonen und ihren Copolymeren und den Hydroxypropylcellulosen.
7. Verbundmaterial nach einem der Ansprüche 1 bis 6,
dadurch gekennzeichnet,
daß das oberflächenaktive Mittel ein anionisches oder nichtionisches oberflächenaktives Mittel ist.
8. Verbundmaterial nach einem der Ansprüche 1 bis 7 zur Verwendung als Abdichtungsmitten in elektrischen Kabeln für den Transport von Energie mittlerer und hoher Spannung, dadurch gekennzeichnet, daß die Schicht außerdem 2 bis 8 g/m$^2$ leitenden Ruß enthält.
9. Verfahren zur Herstellung des Verbundmaterials nach einem der Ansprüche 1 bis 8,
dadurch gekennzeichnet,
daß es daraus besteht, daß man den Träger auf mindestens einer seiner Oberflächen mit einer Paste bestreicht, die das hydroexpansionsfähige Polymerpulver, das wasserlösliche Bindemittel und das oberflächenaktive Mittel, die jeweils ausgewählt wurden, umfaßt, in den für die Schicht vorgesehenen Proportionen, ebenso wie gegebenenfalls andere Zusatzmittel und/oder Ruß, die mit Hilfe einer anderen Flüssigkeit als Wasser homogenisiert wird und daß die Flüssigkeit anschließend abgedampft wird.
10. Verfahren nach Anspruch 9, dadurch gekennzeichnet, daß die Flüssigkeit zur Homogenisierung ausgewählt ist unter niederen Alkoholen, vorzugsweise Methanol oder Ethanol.
11. Anstrichpaste zur Durchführung des Verfahrens nach Anspruch 9 oder 10, dadurch gekennzeichnet, daß sie im wesentlichen bezogen auf Gewicht umfaßt:

- 57 bis 16,5 % hydroexpansionsfähiges Polymerpulver;
- 1,5 bis 13,8 % wasserlösliches Bindemittel;
- 0 bis 13,2 % oberflächenaktives Mittel;
- 0 bis 14,4 % leitenden Ruß und
- 40 bis 70 % Homogenisierungsflüssigkeit.

12. Verwendung des Verbundmaterials nach einem der Ansprüche 1 bis 8 als Abdichtungsmittel für Kabel.
13. Verwendung des Verbundmaterials nach einem der Ansprüche 1 bis 7 in der Landwirtschaft.
14. Verwendung des Verbundmaterials nach einem der Ansprüche 1 bis 7 in der Medizin und Chirurgie.

**Claims**

1. Composite material essentially comprising a flat solid support provided with, on at least one of its surfaces, a coating containing a high proportion of a water-swellable polymer powder, characterized in that the water-swellable polymer powder is fixed on the support by means of a water-soluble binder, preferably in the presence of a surface-active agent, and in that the coating is essentially made up of:

7

- 95 to 55 % by weight of water-swellable polymer powder;
- 5 to 23 % by weight of water-soluble binder; and
- 0 to 22 % by weight of surface-active agent.

2. Composite material according to claim 1, characterized in that the support is flexible.

3. Composite material according to claim 2, characterized in that the support is of unwoven material.

4. Composite material according to one of claims 1 to 3, characterized in that the water-swellable polymer is chosen from modified acrylic polymers, grafted starches, polyacrylamides, carboxymethylcellulose and its derivatives.

5. Composite material according to one of claims 1 to 4, characterized in that the water-swellable substance is a superabsorbent material.

6. Composite material according to one of claims 1 to 5, characterized in that the water-soluble binder is chosen from polyvinylpyrrolidones and their copolymers, and hydroxypropylcelluloses.

7. Composite material according to one of claims 1 to 6, characterized in that the surface-active agent is an anionic or non-ionic surface-active agent.

8. Composite material according to one of claims 1 to 7, for use as a waterproofing agent in electric cables for the transport of mean and high tension energy, characterized in that its coating contains in addition 2 to 8 g/m$^2$ of conductive carbon black.

9. Process for the manufacture of the composite material according to one of claims 1 to 8, characterized in that it consists of coating at least one of the surfaces of the support with a paste containing the waterswellable polymer powder, the water-soluble binder and the surface-active agent that have been chosen, in the proportion chosen for the coating as well as possibly other adjuvants and/or carbon black, homogenized by means of a liquid other than water, and then evaporating the liquid.

10. Process according to claim 9, characterized in that the liquid for homogenization is chosen from lower alcohols, preferably methanol or ethanol.

11. Coating paste for putting the process according to claim 9 or 10 into operation, characterized in that it essentially contains, by weight:

- 57 to 16.5 % of water-swellable polymer powder;
- 1.5 to 13.8 % of water-soluble binder;
- 0 to 13.2 % of surface-active agent;
- 0 to 14.4 % of conductive carbon black; and
- 40 to 70 % of homogenization liquid.

12. Use of the composite material according to one of claims 1 to 8 as a waterproofing agent in cables.

13. Use of the composite material according to one of claims 1 to 7 in agriculture.

14. Use of the composite material according to one of claims 1 to 7 in medicine and in surgery.

# FIG.1.

# FIG.2.

# FIG.3.

# FIG.4.

1